# DEMANDE DE BREVET EUROPEEN

(11) **EP 2 607 997 A2**
(43) Date de publication de la demande: **26.06.2013**
(21) Numéro de dépôt: 12197773.0
(22) Date de dépôt: 18.12.2012
(51) Int. Cl.: G06F 3/041, G06F 3/044, G06F 1/16

(54) **Protection pour dalle tactile**

(30) Priorité: 19.12.2011 FR 1161884
(71) Demandeur: Affiliated Computer Services Solutions France, 07500 Guilherand Granges (FR)
(72) Inventeur: Froment, Marion, 07500 Guilherand Granges (FR); Le Bidean, Guillaume, 07500 Guilherand Granges (FR)
(74) Mandataire: Thibon, Laurent

(57) **Abrégé**

L'invention concerne un dispositif d'interface utilisateur comportant une dalle tactile (3) derrière une plaque de protection (5), dans lequel la dalle tactile (3) est libre en translation perpendiculairement à la plaque de protection (5).

## Description

### Domaine de l'invention

La présente invention concerne des appareils munis d'un dispositif d'interface utilisateur comportant une dalle tactile, par exemple un écran tactile. Elle vise plus particulièrement des appareils destinés à être installés dans des lieux publics, et en particulier des appareils de traitement de titres de transport tels que des distributeurs automatiques de titres de transports, des lecteurs de titres de transport, des bornes de validation de titres de transport, etc.

### Exposé de l'art antérieur

Un inconvénient des équipements comportant une dalle tactile, et en particulier ceux destinés à être installés dans des lieux publics, réside dans la fragilité de la dalle. En effet, la dalle tactile comporte généralement une plaque de verre relativement mince, susceptible de se briser en cas de choc. Pour pallier cet inconvénient, il est connu de placer la dalle tactile derrière une vitre de protection transparente en un matériau résistant aux chocs, tel que du polycarbonate.

Toutefois, afin de ne pas transmettre à la dalle tactile les chocs éventuels subis par la vitre, on est généralement conduit à écarter la dalle de la vitre. Cela nuit à l'affichage et à la sensibilité de l'interface utilisateur.

Des exemples de dispositifs utilisant des dalles d'affichage ou des dalles tactiles sont décrits dans les documents US2003/223187, EP0626665, US6152550 et US2006/166727.

### Résumé

Ainsi, un objet d'un mode de réalisation de la présente invention est de prévoir un dispositif d'interface utilisateur comportant une dalle tactile, ce dispositif palliant au moins en partie certains des inconvénients des dispositifs connus.

Un autre objet d'un mode de réalisation de la présente invention est de prévoir un dispositif d'interface utilisateur comportant une dalle tactile, ce dispositif présentant une résistance aux chocs accrue par rapport aux dispositifs connus.

Un autre objet d'un mode de réalisation de la présente invention est de prévoir un dispositif d'interface utilisateur comportant une dalle tactile, ce dispositif présentant des performances améliorées, et en particulier une sensibilité au toucher améliorée, par rapport aux dispositifs connus.

Un autre objet d'un mode de réalisation de la présente invention est de prévoir un dispositif d'interface utilisateur comportant un écran d'affichage, ce dispositif présentant une résistance aux chocs accrue et des performances d'affichage améliorées par rapport aux dispositifs connus.

Ainsi, un mode de réalisation de la présente invention prévoit un dispositif d'interface utilisateur comportant une dalle tactile derrière une plaque de protection, dans lequel la dalle tactile est libre en translation par rapport à la plaque de protection, selon un axe perpendiculaire à la plaque de protection.

Selon un mode de réalisation de la présente invention, des moyens de rappel élastique maintiennent la dalle tactile en appui contre la plaque de protection.

Selon un mode de réalisation de la présente invention, les moyens de rappel élastique comportent au moins un ressort.

Selon un mode de réalisation de la présente invention, le ressort est un ressort métallique hélicoïdal.

Selon un mode de réalisation de la présente invention, la plaque de protection est maintenue par un châssis fixé à un boîtier du dispositif, la dalle tactile étant libre en translation par rapport au boîtier.

Selon un mode de réalisation de la présente invention, la plaque de protection est une vitre transparente.

Selon un mode de réalisation de la présente invention, la dalle tactile est fixée à un support libre en translation perpendiculairement à la plaque de protection.

Selon un mode de réalisation de la présente invention, le support est monté libre en translation le long de coulisses disposées perpendiculairement à la plaque de protection.

Selon un mode de réalisation de la présente invention, la dalle tactile est une dalle à effet capacitif projeté.

Un autre mode de réalisation de la présente invention est de prévoir un appareil de traitement de titres de transport comportant un dispositif d'interface utilisateur du type susmentionné.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1A et 1B sont des vues en coupe illustrant de façon très schématique un exemple d'un appareil usuel équipé d'un dispositif d'interface utilisateur comportant une dalle tactile ; et
les figures 2A et 2B sont des vues en coupe illustrant schématiquement un mode de réalisation d'un appareil équipé d'un dispositif d'interface utilisateur comportant une dalle tactile.

### Description détaillée

Par souci de clarté, de mêmes éléments ont été désignés par de mêmes références aux différentes figures et, de plus, les diverses figures ont été tracées sans respect d'échelle. Par ailleurs, seuls les éléments utiles à la compréhension de l'invention ont été représentés et décrits. En particulier, ni les fonctions des appareils équipés d'une dalle tactile, ni les moyens utilisés pour réaliser ces fonctions, n'ont été détaillés, les modes de réalisation décrits étant compatibles avec tout type d'appareil équipé d'un dispositif d'interface utilisateur comportant une dalle tactile (distributeur automatique de titres de transport, lecteur de titres de transport, panneau d'information interactif, etc.).

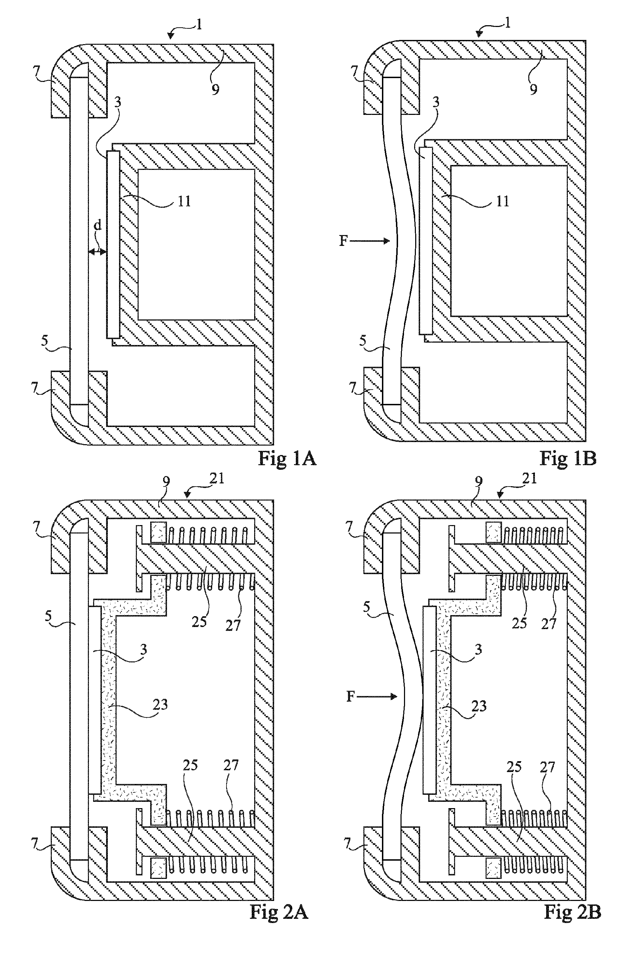

Les figures 1A et 1B sont des vues en coupe illustrant de façon très schématique un exemple d'un appareil 1 équipé d'un dispositif d'interface utilisateur comportant une dalle tactile 3. Une vitre de protection 5, par exemple en polycarbonate, est disposée devant la dalle tactile 3, dans un plan parallèle au plan de la dalle 3. La dalle tactile 3 est réalisée dans une technologie permettant de déceler les touchers à travers la vitre de protection 5. On utilise par exemple une dalle tactile à effet capacitif projeté. La vitre 5 est maintenue par un châssis 7 fixé à un boîtier 9 de l'appareil. La dalle tactile 3 est maintenue par un support 11 solidaire du boîtier 9.

Comme cela apparaît sur la figure 1A, la dalle tactile 3 n'est pas accolée à la vitre de protection 5. Il est prévu une distance de garde d entre la dalle 3 et la vitre 5, pour éviter qu'un éventuel choc subi par la vitre de protection 5, par exemple en cas de coup porté sur la vitre 5 par un vandale, ne soit directement transmis à la dalle tactile 3, ce qui pourrait l'endommager, même si ce coup ne brise pas la vitre 5.

Comme cela est représenté sur la figure 1B, la vitre de protection 5 peut présenter une flexibilité non négligeable, notamment lorsqu'elle est réalisée en un matériau synthétique tel que le polycarbonate. Ainsi, l'application d'une force F perpendiculairement à la vitre 5, par exemple en cas de coup porté sur la vitre 5, peut provoquer, au moins temporairement, une déformation de la vitre 5. La distance de garde d entre la dalle 3 et la vitre 5 doit être choisie en tenant compte de la capacité de déformation de la vitre, de façon qu'en cas de coup porté sur la vitre, cette dernière ne vienne pas écraser la dalle tactile contre le support 11, ce qui risquerait d'endommager la dalle.

Un inconvénient est que la distance de garde prévue entre la dalle tactile 3 et la vitre de protection 5 nuit aux performances du dispositif d'interface utilisateur, et notamment à sa sensibilité au toucher. Réduire la distance de garde n'est toutefois pas souhaitable car cela reviendrait à diminuer la résistance aux chocs du dispositif.

Un autre inconvénient est qu'en cas de choc particulièrement violent, la déformation de la vitre 5 peut être telle que, malgré la distance de garde d, la vitre 5 vienne écraser la dalle tactile 3 contre le support 11 et endommager la dalle.

Les figures 2A et 2B sont des vues en coupe illustrant schématiquement un mode de réalisation d'un appareil 21 équipé d'un dispositif d'interface utilisateur comportant une dalle tactile 3.

Une vitre de protection transparente 5 en un matériau résistant aux chocs, par exemple du polycarbonate, est disposée devant la dalle tactile 3. Le cas échéant, et si cela est compatible avec le fonctionnement de la dalle tactile 3, une plaque opaque en un matériau résistant aux chocs pourra remplacer la vitre transparente 5. En particulier, si la dalle tactile n'est pas associée à un écran d'affichage, la plaque de protection n'a pas besoin d'être transparente. La dalle tactile 3 est réalisée dans une technologie permettant de déceler les touchers à travers la vitre de protection 5 (ou, le cas échéant, à travers une plaque de protection opaque), par exemple une technologie utilisant un effet capacitif projeté. Dans l'exemple représenté, la dalle tactile 3 et la vitre de protection 5 sont approximativement planes, et sont disposées dans des plans sensiblement parallèles.

La vitre de protection 5 est par exemple maintenue par un châssis 7 fixé à un boîtier 9 de l'appareil (ou d'une seule pièce avec le boîtier 9).

Selon un aspect du mode de réalisation décrit, en configuration normale d'utilisation de l'appareil, la dalle tactile 3 est libre en translation par rapport à la vitre de protection 5, selon un axe approximativement perpendiculaire à la vitre 5. Par l'expression "en configuration normale d'utilisation de l'appareil" on entend ici que l'appareil est dans sa configuration mécanique normale de fonctionnement, c'est-à-dire que tous les éventuels capots ou trappes de maintenance de l'appareil sont en position fermée et verrouillée. En particulier, par cette expression, on entend exclure le cas où, pour des opérations de maintenance de l'appareil, il pourrait être prévu un système d'accès à la dalle tactile, dans lequel la vitre de protection pourrait coulisser en translation selon un axe perpendiculaire à la dalle tactile, le long de rails (ou autres moyens de guidage en translation) de façon à permettre l'intervention d'un technicien.

Dans l'exemple représenté, la vitre 5 étant solidaire du châssis 7, lui-même solidaire du boîtier, la dalle tactile 3 est libre en translation par rapport au châssis 7 et au boîtier 9. Dans cet exemple, la dalle tactile 3 est fixée à un support 23, par exemple une pièce en plastique, le support 23 étant lui-même monté libre par rapport à la vitre 5, selon un axe approximativement perpendiculaire au plan de la vitre 5.

Dans un exemple de réalisation, des moyens de guidage 25, par exemple des coulisses en forme de colonne, sont fixés au boîtier 9, les coulisses 25 étant disposées perpendiculairement à la vitre de protection 5. Le support 23 est monté en coulissement sur les moyens de guidage 25, par exemple par l'intermédiaire d'ouvertures circulaires formées dans le support 23, et dans lesquelles peuvent glisser librement en translation les coulisses 25. Les moyens de guidage 25 sont prévus pour garantir que la dalle tactile 3 n'ait pas d'autre degré de liberté que celui de translation perpendiculairement à la vitre 25. En particulier, les moyens de guidage 25 sont prévus pour garantir que la dalle tactile reste toujours approximativement parallèle à la vitre de protection 5.

Comme cela ressort de la figure 2B, un avantage d'un tel montage est qu'en cas de choc, et notamment lorsqu'une force F est appliquée à la vitre 5, perpendiculairement à la vitre, la dalle tactile 3 n'est pas endommagée, et ce même si la vitre se déforme jusqu'à venir en contact avec la dalle. En effet, dans ce cas, la dalle tactile est simplement repoussée vers l'intérieur de l'appareil, par translation du support 23 le long des coulisses 25. La dalle ne subit donc pas, comme dans l'exemple décrit en relation avec les figures 1A et 1B, une contrainte susceptible de l'endommager, par écrasement entre la vitre de protection 5 et le support de la dalle (support 11 des figures 1A et 1B).

Une conséquence avantageuse d'un tel montage est qu'il n'est plus nécessaire de prévoir une distance de garde entre la dalle tactile 3 et la vitre de protection 5. En tout état de cause, si une distance de garde est quand même prévue, elle peut être réduite de façon significative par rapport à un montage du type décrit en relation avec les figures 1A et 1B. Ceci permet d'améliorer les performances de l'interface utilisateur de l'appareil, et notamment sa sensibilité au toucher.

Dans un mode de réalisation préféré illustré par les figures 2A et 2B, on prévoit des moyens de rappel élastiques pour maintenir la dalle tactile 3 en appui contre la plaque de protection 5 (distance de garde sensiblement nulle). Dans l'exemple représenté, des ressorts 27, par exemple des ressorts métalliques hélicoïdaux, sont disposés parallèlement aux coulisses 25 de guidage du support 23. Les ressorts 27 sont montés en compression entre le support 23 d'une part, et le fond du boîtier 9 de l'appareil d'autre part, du côté de la dalle 3 opposé à la vitre de protection. De cette manière, les ressorts 27 maintiennent la dalle tactile 3 en appui contre la vitre de protection 5, ou à proximité de la vitre de protection 5, une petite distance de garde, par exemple liée à la forme du support 23, pouvant éventuellement subsister (dans ce cas c'est le support 23 qui est maintenu en appui contre la vitre de protection 5 ou contre le châssis 7 de maintien de la vitre).

La raideur des moyens de rappel élastique sera choisie en tenant compte de la fragilité de la dalle et de la force des coups susceptibles d'être subis par la vitre de protection 5. En particulier, les moyens de rappel seront choisis adaptés à ce que la force nécessaire pour faire reculer la dalle 3 lorsqu'un coup est porté sur la vitre 5, soit inférieure à la contrainte maximale à laquelle la dalle 3 peut résister.

La prévision de moyens de rappel élastique présente un double avantage. En fonctionnement normal, ils permettent de maintenir la dalle tactile 3 au plus près de la vitre de protection 5, ce qui améliore la sensibilité au toucher du dispositif. Et en cas de choc ayant entraîné une déformation temporaire de la vitre de protection et un recul de la dalle, ils permettent de ramener automatiquement la dalle en position, par exemple en appui contre la vitre de protection, sans nécessiter l'intervention d'un technicien.

Bien entendu, l'homme du métier saura prévoir toute autre disposition adaptée des moyens de rappel élastique, pour obtenir le fonctionnement recherché.

Un autre avantage du mode de réalisation décrit en relation avec les figures 2A et 2B est qu'il présente une résistance accrue aux chocs par rapport à un dispositif du type décrit en relation avec les figures 1A et 1B. En effet, dans le mode de réalisation décrit en relation avec les figures 1A et 1B, la résistance aux chocs est limitée par la distance de garde d, la distance de garde d étant elle-même limitée par la distance à partir de laquelle la dalle tactile ne peut plus être actionnée (sensibilité de la dalle). Dans le dispositif décrit en relation avec les figures 2A et 2B, un choc, même très violent, pourra provoquer un recul important de la dalle tactile 3, mais ne conduira pas à l'endommager.

Des modes de réalisation particuliers de la présente invention ont été décrits. Diverses variantes et modifications apparaîtront à l'homme de l'art.

En particulier, les modes de réalisation décrits ne se limitent pas au cas où la dalle tactile utilise un effet capacitif projeté. Toute autre technologie tactile susceptible d'être actionnée à travers une plaque de protection pourra être utilisée.

Par ailleurs, on a décrit ci-dessus un exemple de réalisation dans lequel la dalle tactile 3 et la plaque de protection 5 sont sensiblement planes. L'homme de l'art saura adapter le mode de réalisation décrit ci-dessus à un dispositif comportant une surface tactile non plane et une surface de protection non plane, par exemple parallèle à la surface tactile. Dans ce cas, l'axe selon lequel la surface tactile est montée libre en translation pourra être orthogonal au plan moyen de la surface de protection, ou orthogonal à l'un des plans tangents à la surface de protection.

En outre, on a décrit, en relation avec les figures 2A et 2B, un exemple de réalisation d'un appareil dans lequel une vitre de protection 5 est maintenue par un châssis 7 fixé à un boîtier 9 de l'appareil. Les modes de réalisation décrits ne se limitent pas à cette configuration particulière. Par exemple, le boîtier 9 pourra être lui-même fixé à une armature de l'appareil, le châssis 7 et les moyens de guidage 25 étant fixés non pas directement au boîtier 9 mais à l'armature de l'appareil. L'homme de l'art saura mettre en oeuvre le fonctionnement recherché quelle que soit la configuration mécanique de l'appareil.

De plus, les modes de réalisation décrits ne se limitent pas à l'exemple décrit en relation avec les figures 2A et 2B, dans lequel les moyens de guidage sont des coulisses en forme de colonnes. L'homme de l'art saura adapter le mode de réalisation décrit en utilisant d'autres moyens de guidage, par exemple des rails, des glissières, etc. En variante, les moyens de guidage et les moyens de rappel élastique pourront être confondus.

Par ailleurs, on a décrit ci-dessus une protection pour dalle tactile. L'homme de l'art saura adapter les modes de réalisation décrits à la protection d'un écran d'affichage (par exemple destiné à être installé dans un lieu public), ou à d'autres dispositifs électroniques.

## Revendications

1. Dispositif d'interface utilisateur comportant une dalle tactile (3) derrière une plaque de protection (5), dans lequel la dalle tactile (3) est libre en translation par rapport à la plaque de protection (5), selon un axe perpendiculaire à la plaque de protection (5).

2. Dispositif selon la revendication 1, dans lequel des moyens (27) de rappel élastique maintiennent la dalle tactile (3) en appui contre la plaque de protection (5).

3. Dispositif selon la revendication 2, dans lequel les moyens de rappel élastique comportent au moins un ressort (27).

4. Dispositif selon la revendication 3, dans lequel ledit au moins un ressort (27) est un ressort métallique hélicoïdal.

5. Dispositif selon l'une quelconque des revendications 1 à 4, dans lequel la plaque de protection (5) est maintenue par un châssis (7) fixé à un boîtier (9) du dispositif, la dalle tactile (3) étant libre en translation par rapport au boîtier (9).

6. Dispositif selon l'une quelconque des revendications 1 à 5, dans lequel la plaque de protection est une vitre transparente (5).

7. Dispositif selon l'une quelconque des revendications 1 à 6, dans lequel la dalle tactile (3) est fixée à un support (23) libre en translation perpendiculairement à la plaque de protection (5).

8. Dispositif selon la revendication 7, dans lequel le support (23) est monté libre en translation le long de coulisses (25) disposées perpendiculairement à la plaque de protection.

9. Dispositif selon l'une quelconque des revendications 1 à 8, dans lequel la dalle tactile (3) est une dalle à effet capacitif projeté.

10. Appareil de traitement de titres de transport comportant un dispositif d'interface utilisateur selon l'une quelconque des revendications 1 à 9.
